# EUROPÄISCHE PATENTANMELDUNG

(11) **EP 2 020 830 A2**
(43) Veröffentlichungstag der Anmeldung: **04.02.2009**
(21) Anmeldenummer: 08012645.1
(22) Anmeldetag: 12.07.2008
(51) Int. Cl.: H05B 41/392

(54) **Verfahren zur Ansteuerung eines Universal-Dimmers**

(30) Priorität: 02.08.2007 DE 102007036438
(71) Anmelder: ABB AG, 68309 Mannheim (DE)
(72) Erfinder: Götte, Karsten, Dipl.-Ing., 58513 Lüdenscheid (DE); Clever, Gerhard, Dipl.-Ing., 58553 Halver (DE)
(74) Vertreter: Partner, Lothar

(57) **Zusammenfassung**

Es wird ein Verfahren zur Ansteuerung der Halbleiterschalter eines Universal-Dimmers (1) vorgeschlagen, welcher bei kapazitiver und / oder ohmscher Last im Phasenabschnittbetrieb und bei induktiver Last im Phasenanschnittbetrieb arbeitet und welcher mindestens je ein Halbleiterventil zur Schaltung der positiven und der negativen Spannungs-Halbwelle aufweist. Der Betrieb eines an den Universal-Dimmer (1) angeschlossenen elektronischen Transformators (4) mit kapazitivem oder gemischt kapazitivem / induktivem Verhalten erfolgt stets in der Betriebsart "Phasenabschnitt", wobei das Halbleiterventil derjenigen Halbwelle, an deren Ende die Synchronisation erfolgt, bei jeder Halbwelle dieser Art während einer vorgegebenen, festen Zeitspanne (Δt) bis zum Ende der Halbwelle zur Erzeugung eines Formatierungsimpulses eingeschaltet wird.

## Beschreibung

Die Erfindung bezieht sich auf ein Verfahren zur Ansteuerung der Halbleiterschalter eines Universal-Dimmers, welcher bei kapazitiver und / oder ohmscher Last im Phasenabschnittbetrieb und bei induktiver Last im Phasenanschnittbetrieb arbeitet und welcher mindestens je ein Halbleiterventil zur Schaltung der positiven und der negativen Spannungs-Halbwelle aufweist. Die Erfindung kann insbesondere für 2-Draht-Dimmer verwendet werden, welche eine Beleuchtungseinrichtung (Niedervolt-Halogenlampen) über einen elektronischen Transformator (Schaltnetzteil, elektronischer Sicherheitstrafo für Niedervolt-Halogenlampen) speisen.

Aus der EP 0 618 667 B1 ist ein Verfahren zur Steuerung des Wechselstromes in einem Lastkreis mit Hilfe abschaltbarer Halbleiterschalter bekannt, die im Phasenanschnitt oder Phasenabschnitt arbeiten können und bei denen eine Steuereinheit dafür sorgt, dass sie in Abhängigkeit vom Lastverhalten betrieben werden. Beim Anlegen der Netzspannung beginnt zunächst ein Testprogramm zu laufen, bei dem die angeschlossene Last mit mindestens einem vorgegebenem Stromimpuls beaufschlagt wird. Anschließend wird aus dem Strom- oder Spannungsverhalten der Last gegenüber diesem Stromimpuls die Art der Last ermittelt. Erst dann werden die Halbleiterschalter für einen der Last entsprechenden Phasenan- oder Phasenabschnitt freigegeben. Die Halbleiterschalter arbeiten bei kapazitiver und/oder ohmscher Last im Phasenabschnitt und bei induktiver Last im Phasenanschnitt. Ein nach diesem Verfahren arbeitender Dimmer wird nachfolgend als Universal-Dimmer bezeichnet.

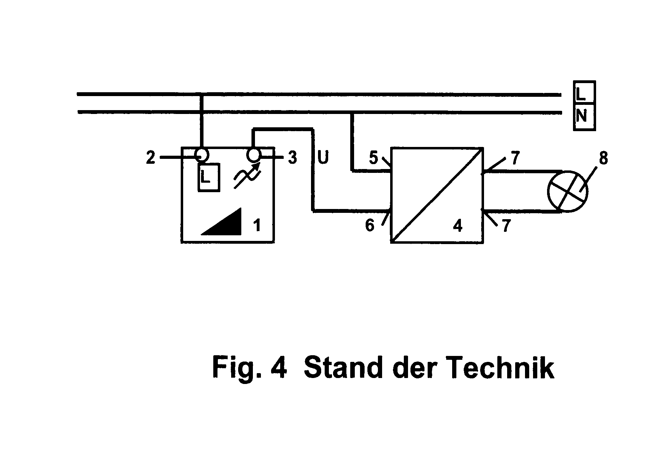

In Fig. 4 ist ein bekannter Universal-Dimmer dargestellt, welcher eine Beleuchtungseinrichtung über einen elektronischen Transformator (Schaltnetzteil) speist. Der Universal-Dimmer 1 ist über seinem Phasenleiter-Anschluss 2 an den Phasenleiter L eines Wechselspannungsnetzes angeschlossen, dessen Nulleiter N mit einem Nulleiter-Anschluss 5 eines elektronischen Transformators (Schaltnetzteil) 4 verbunden ist. Ein Dimmer-Anschluss 6 des elektronischen Transformators 4 ist an einen Last-Ausgang 3 des Universal-Dimmers 1 angeschlossen, an welchem die Dimmer-Ausgangsspannung U ansteht. Vorteilhaft sind nur zwei Drähte für den elektrischen Anschluss des Universal-Dimmers 1 erforderlich, was insbesondere bei Renovierungen / Modernisierungen von Wohnungen und Häusern vorteilhaft und kostensparend ist, denn zusätzliche elektrische Leitungen zwischen Dimmer und Beleuchtungseinrichtung müssen nicht verlegt werden. Eine Beleuchtungseinrichtung 8 ist mit Last-Anschlüssen 7 des elektronischen Transformators 4 verbunden.

Der Universal-Dimmer 1 weist selbstverständlich folgende Baukomponenten auf, wie dies auch in der EP 0 618 667 B1 erläutert ist:
- ein Leistungsteil mit abschaltbaren Halbleiterschaltern (Power-MOS-Transistoren, Bipolar-Transistoren, IGBT, GTO, MCT),
- eine Steuereinheit (Mikroprozessor),
- eine bei Anschluss einer induktiven Last für den Phasenanschnittbetrieb erforderliche Stromsynchronisation zur Detektion des Nulldurchganges des Laststromes,
- eine bei Anschluss einer kapazitiven und / oder ohmschen Last für den Phasenabschnittbetrieb erforderliche Spannungssynchronisation zur Detektion des Nulldurchganges der Netzspannung,
- eine Treiberstufe,
- ein Netzteil und
- eine Bedieneinheit.
Der Inhalt der EP 0 618 667 B1 wird in den Offenbarungsgehalt der vorliegenden Anmeldung ausdrücklich miteinbezogen.

Es können grundsätzlich zwei Arten von elektronischen Transformatoren (Schaltnetzteile) unterschieden werden:
- "C-Transformatoren": haben kapazitives Verhalten und sind nur im Phasenabschnittbetrieb dimmbar.
- "LC-Transformatoren": haben gemischt kapazitives/induktives Verhalten und sind im Phasenabschnitt und im Phasenanschnittbetrieb dimmbar.

Wie vorstehend erwähnt haben Universal-Dimmer vorteilhaft die Möglichkeit, Lasten sowohl im Phasenabschnittbetrieb als auch im Phasenanschnittbetrieb zu betreiben. Um auch "C-Transformatoren" zu unterstützen, betreiben Universal-Dimmer solche Transformatoren in der Regel im Phasenabschnittbetrieb.

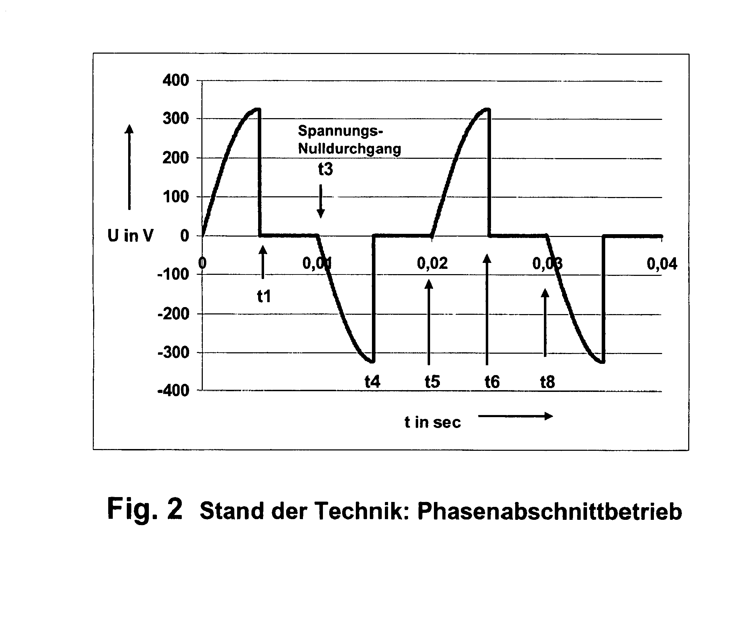

Fig. 2 zeigt den zeitlichen Verlauf der Dimmer-Ausgangsspannung U beim Phasenabschnittbetrieb, bei welchem die abschaltbaren Halbleiterschalter (vorzugsweise Transistoren) des Leistungsteils zum Beginn der positiven und negativen Halbwelle für die eingestellte Stromflusszeit den elektronischen Transformator (Schaltnetzteil) 4 ansteuern. Am Ende der eingestellten Stromflusszeit zum Zeitpunkt t1 (positive Spannungs-Halbwelle) werden die abschaltbaren Halbleiterschalter (Transistoren) hochohmig. Während der Zeitspanne bis zum nächsten Nulldurchgang zum Zeitpunkt t3 kann der Universal-Dimmer sein eigenes Netzteil nachladen. Allerdings fließt während dieser Zeitspanne t1 < t < t3 auch ein Querstrom durch den elektronischen Transformator 4. Dieser Querstrom führt dazu, dass sich der Eingangskondensator des elektronischen Transformators 4 bis auf einen Wert auflädt, bei welchem das Schaltnetzteil des elektronischen Transformators 4 zu schwingen beginnt. Dieser Wert hängt ab von der Restladung des Eingangskondensators, dem per Bedieneinheit vorgegebenem Phasenwinkel und dem Querstrom des Universal-Dimmers, der durch diesen Eingangskondensator fließt.

Fig. 2 zeigt den weiteren periodischen der Verlauf Dimmer-Ausgangsspannung U mit hochohmigem (sperrendem) Halbleiterschalter ab den Zeitpunkten t4 (negative Spannungs-Halbwelle) und t6 (positive Spannungs-Halbwelle) sowie Spannungs-Nulldurchgängen zu den Zeitpunkten t5 und t8.

Ein 2-Draht-Dimmer wird in der Regel durch die Spannungs-Nulldurchgänge synchronisiert. Speziell bei 2-Draht-Dimmern, die sich über die Last, hier den elektronischen Transformator, versorgen müssen, führt der Phasenabschnittbetrieb deshalb zu Synchronisationsproblemen, da wegen der vorstehend erläuterten Effekte (zum Zeitpunkt des Spannungs-Nulldurchgangs haben die Komponenten des elektronischen Transformators 4 Restladung / Restspannung gespeichert) der "wahre" Spannungs-Nulldurchgang durch den 2-Draht-Dimmer nicht exakt genug ermittelbar ist. Abhängig von der per Bedieneinheit vorgegebenen Helligkeit der Beleuchtungseinrichtung führt dies zum Lampenflackern oder Lampenflimmern.

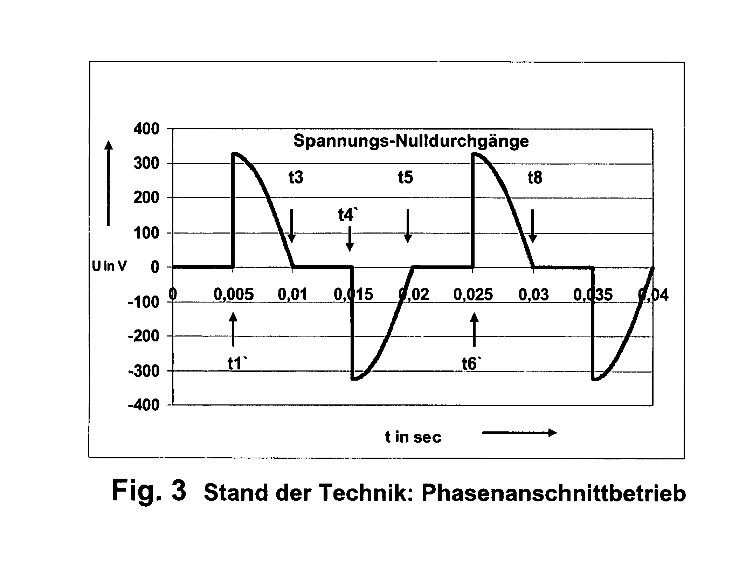

Fig. 3 zeigt den zeitlichen Verlauf der Dimmer-Ausgangsspannung beim Phasenanschnittbetrieb, bei welchem die Halbleiterschalter (Transistoren oder Triacs) des Leistungsteils zum Zeitpunkt t1' derart angesteuert werden, dass zum Ende der positiven Spannungs-Halbwelle zum Zeitpunkt t3 (Spannungs-Nulldurchgang) die eingestellte Stromflusszeit erreicht wird. Fig. 3 zeigt den weiteren periodischen Verlauf der Dimmer-Ausgangsspannung U mit leitendem Halbleiterschalter ab den Zeitpunkten t4' (negative Spannungs-Halbwelle) und t6' (positive Spannungs-Halbwelle) sowie Spannungs-Nulldurchgängen zu den Zeitpunkten t5 und t8.

Die Betriebsart Phasenanschnittbetrieb kann bei elektronischen Transformatoren nur für LC-Transformator eingesetzt werden. C-Transformatoren würden durch diese Betriebsart zerstört werden, wie vorstehend erwähnt. Auf der anderen Seite erlaubt der Phasenanschnittbetrieb dem 2-Draht-Dimmer jedoch eine genauere Synchronisation, da zum Zeitpunkt des Spannungs-Nulldurchgangs die Komponenten des elektronischen Transformators 4 keine Restladung / Restspannung gespeichert haben. Hierdurch kann der "wahre" Spannungs-Nulldurchgang durch den 2-Draht-Dimmer exakt ermittelt werden.

Der Erfindung liegt die Aufgabe zugrunde, ein Verfahren zur Ansteuerung eines Universal-Dimmers anzugeben, das universell bei jedem elektronischen Transformator (Schaltnetzteil), d. h. sowohl bei Anschluss eines C-Transformators als auch bei Anschluss eines LC-Transformators, eingesetzt werden kann.

Diese Aufgabe wird in Verbindung mit den Merkmalen des Oberbegriffes erfindungsgemäß dadurch gelöst, dass der Betrieb eines an den Universal-Dimmer angeschlossenen elektronischen Transformators mit kapazitivem oder gemischt kapazitivem / induktivem Verhalten stets in der Betriebsart "Phasenabschnitt" erfolgt, wobei das Halbleiterventil derjenigen Halbwelle, an deren Ende die Synchronisation erfolgt, bei jeder Halbwelle dieser Art während einer vorgegebenen, festen Zeitspanne bis zum Ende der Halbwelle zur Erzeugung eines Formatierungsimpulses eingeschaltet wird.

Die mit der Erfindung erzielbaren Vorteile bestehen insbesondere darin, dass trotz Verwendung des Phasenabschnittbetriebs die wahren Spannungs-Nulldurchgänge detektiert werden, wodurch Lampenflackern oder Lampenflimmern bei der Beleuchtungseinrichtung verhindert wird. Erreicht wird dies durch einen zusätzlichen Formatierungsimpuls am Ende jeder zur Synchronisierung dienenden Halbwelle, der dazu dient, die verbleibende Restspannung in elektronischen Transformatoren zu vernichten.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: den zeitlichen Verlauf der Dimmer-Ausgangsspannung beim Phasenabschnittbetrieb mit Formatierungsimpulsen,
- Fig. 2: den zeitlichen Verlauf der Dimmer-Ausgangsspannung beim Phasenabschnittbetrieb (Stand der Technik),
- Fig. 3: den zeitlichen Verlauf der Dimmer-Ausgangsspannung beim Phasenanschnittbetrieb (Stand der Technik),
- Fig. 4: einen Universal-Dimmer, welcher eine Beleuchtungseinrichtung über einen elektronischen Transformator (Schaltnetzteil) speist (Stand der Technik).

Das vorgeschlagene Verfahren zur Ansteuerung eines Universal-Dimmers 1 (Beschreibung wie vorstehend unter Fig. 4) beruht auf der Betriebsart "Phasenabschnittbetrieb", die - wie vorstehend erwähnt - universell bei jedem elektronischen Transformator (Schaltnetzteil), d. h. sowohl C-Transformator als auch LC-Transformator, eingesetzt werden kann. Zusätzlich wird zur Kompensation der vorstehend erläuterten Nachteile (Synchronisationsprobleme, da zum Zeitpunkt des Spannungs-Nulldurchgangs die Komponenten des elektronischen Transformators 4 Restladung / Restspannung gespeichert haben und der "wahre" Spannungs-Nulldurchgang durch den 2-Draht-Dimmer nicht exakt genug ermittelbar ist) das Halbleiterventil derjenigen Halbwelle, an deren Ende (Spannungs-Nulldurchgang) die Synchronisation erfolgt, während einer vorgegebenen, festen Zeitspanne Δt bis zum Ende Halbwelle, d. h. bis zum Spannungs-Nulldurchgang, eingeschaltet. Dieser zusätzliche Impuls - es handelt sich um einen stabilen Arbeitszustand - "formatiert" den elektronischen Transformator (Schaltnetzteil) 4 derart, dass der Spannungs-Nulldurchgang dem "wahren" Spannungs-Nulldurchgang entspricht und wird deshalb auch als "Formatierungsimpuls" bezeichnet. Beim Ausführungsbeispiel erfolgt die Synchronisation am Ende der positiven Spannungs-Halbwelle, d. h. das System wird auf den positiv-negativen Nulldurchgang synchronisiert, so dass die Formatierungsimpulse in diesem Fall stets am Ende der positiven Spannungs-Halbwelle auftreten.

Ein Formatierungsimpuls hat eine feste Breite Δt von etwa 2 ms oder entsprechend 10% der Periodendauer.

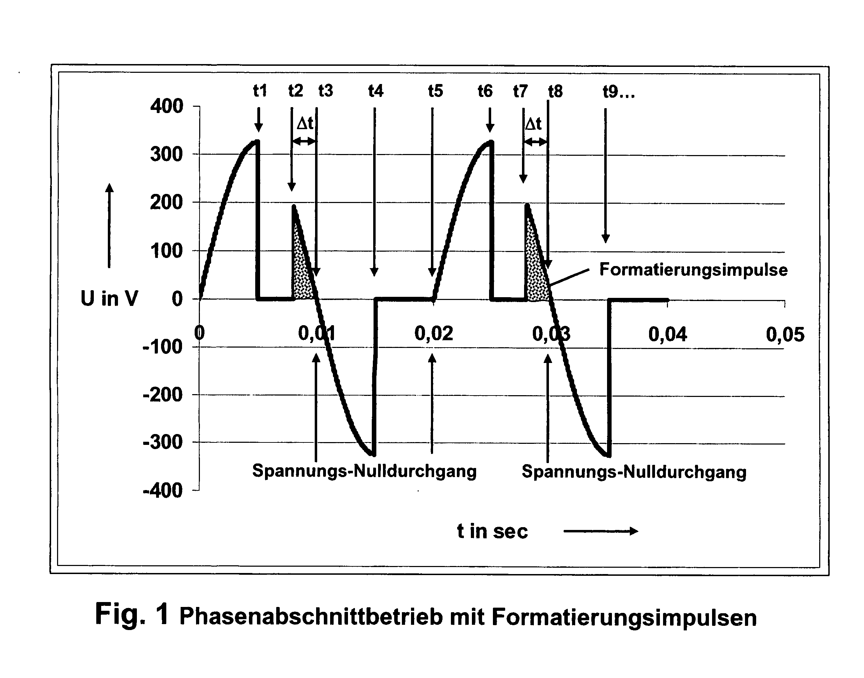

Fig. 1 ist der zeitlichen Verlauf der Dimmer-Ausgangsspannung U beim Phasenabschnittbetrieb mit Formatierungsimpulsen dargestellt. Folgende Zeitpunkte / Zeitspannen sind dargestellt:
- t1, t6:: Beginn der Sperrphase des Halbleiterschalters der positiven Spannungs- Halbwelle
- t2, t7:: Beginn des Formatierungsimpulses,
- t3, t5, t8: Spannungs-Nulldurchgang
- t4, t9: Beginn der Sperrphase des Halbleiterschalters der negativen Spannungs- Halbwelle
- Δt: Zeitspannen (Breite) t2 < t <t3 und t7 < t < t8 für einen Formatierungsim- puls

Selbstverständlich kann die Synchronisation in Abwandlung hiervon am Ende der negativen Spannungs-Halbwelle auftreten, d. h. das System wird auf den negativ-positiven Nulldurchgang synchronisiert, so dass die Formatierungsimpulse in diesem Fall stets am Ende der negativen Spannungs-Halbwelle auftreten.

Prinzipiell sind auch Systeme denkbar, die sowohl im negativ- positiven als auch im positiv-negativen Nulldurchgang synchronisieren. Hier wäre dann ein Formatierungsimpuls sowohl in der negativen als auch in der positiven Halbwelle erforderlich.

### Bezugszeichenliste:

- 1: Universal-Dimmer
- 2: Phasenleiter-Anschluss
- 3: Last-Ausgang
- 4: elektronischer Transformator (Schaltnetzteil)
- 5: Nulleiter-Anschluss
- 6: Dimmer-Anschluss
- 7: Last-Anschlüsse
- 8: Beleuchtungseinrichtung
- L: Phasenleiter eines Wechselspannungsnetzes
- N: Nulleiter
- t: Zeit
- t1,t2...: Zeitpunkte
- Δt: Zeitspanne für einen Formatierungsimpuls
- U: Dimmer-Ausgangsspannung

## Patentansprüche

1. Verfahren zur Ansteuerung der Halbleiterschalter eines Universal-Dimmers (1), welcher bei kapazitiver und / oder ohmscher Last im Phasenabschnittbetrieb und bei induktiver Last im Phasenanschnittbetrieb arbeitet und welcher mindestens je ein Halbleiterventil zur Schaltung der positiven und der negativen Spannungs-Halbwelle aufweist, **dadurch gekennzeichnet, dass** der Betrieb eines an den Universal-Dimmer (1) angeschlossenen elektronischen Transformators (4) mit kapazitivem oder gemischt kapazitivem / induktivem Verhalten stets in der Betriebsart "Phasenabschnitt" erfolgt, wobei das Halbleiterventil derjenigen Halbwelle, an deren Ende die Synchronisation erfolgt, bei jeder Halbwelle dieser Art während einer vorgegebenen, festen Zeitspanne (Δt) bis zum Ende der Halbwelle zur Erzeugung eines Formatierungsimpulses eingeschaltet wird.

2. Verfahren nach Anspruch 1, **dadurch gekennzeichnet, dass** die Synchronisation am Ende der positiven Spannungs-Halbwelle erfolgt, so dass die Formatierungsimpulse stets am Ende der positiven Spannungs-Halbwelle auftreten.

3. Verfahren nach Anspruch 1, **dadurch gekennzeichnet, dass** die Synchronisation am Ende der negativen Spannungs-Halbwelle erfolgt, so dass die Formatierungsimpulse stets am Ende der negativen Spannungs-Halbwelle auftreten.

4. Verfahren nach Anspruch 1, **dadurch gekennzeichnet, dass** die Synchronisation sowohl am Ende der positiven Spannungs-Halbwelle als auch am Ende der negativen Halbwelle erfolgt, so dass die Formatierungsimpulse stets am Ende der positiven Spannungs-Halbwelle und am Ende der negativen Halbwelle auftreten.

5. Verfahren nach einem der vorstehenden Ansprüche, **dadurch gekennzeichnet, dass** ein Formatierungsimpuls eine feste Breite von 10% der Periodendauer aufweist.
